# EUROPÄISCHE PATENTANMELDUNG

(11) **EP 1 112 769 A1**
(43) Veröffentlichungstag der Anmeldung: **04.07.2001**
(21) Anmeldenummer: 00117591.8
(22) Anmeldetag: 16.08.2000
(51) Int. Cl.: B01D 3/40, B01D 3/42

(54) **Verfahren zur Extraktivdestillation und Kolonne zur Durchführung des Verfahrens**

(30) Priorität: 03.12.1999 DE 19958464
(71) Anmelder: Krupp Uhde GmbH, 44141 Dortmund (DE)
(72) Erfinder: Emmerich, Gerhard, 45133 Essen (DE); Gehrke, Helmut Dr., 59269 Beckum-Vellern (DE); Ennenbach, Frank, 45131 Essen (DE); Kolbe, Bärbel Dr., 58452 Witten (DE)
(74) Vertreter: Albrecht, Rainer Harald, Dr.-Ing.

(57) **Zusammenfassung**

Gegenstand der Erfindung ist ein Verfahren zur Extraktivdestillation in einer Kolonne, die einen aus zwei parallelen Kammern (1, 2) bestehenden Kolonnenhauptabschnitt (3) unterhalb einer Aufgabeeinrichtung (4) für ein zu trennendes Gemisch, eine Raffinatsektion (5) oberhalb der Aufgabeeinrichtung (4), einen Abtriebsteil (7) unterhalb des Kolonnenhauptabschnittes (3) sowie einen Sumpf (8) mit zugeordneter Sumpfbeheizung (9) aufweist. Ein Extraktionsmittel wird im Abtriebsteil (7) der Kolonne aufkonzentriert, aus dem Sumpf (8) abgezogen und oberhalb der Raffinatsektion (5) wieder aufgegeben. Eine Raffinatfraktion wird in einer Kammer (1) des Kolonnenhauptabschnittes (3) aus der extraktionsmittelhaltigen Flüssigkeit ausgestrippt und in der oberseitigen Raffinatsektion (5) zu einem Raffinat hoher Reinheit aufkonzentriert. Aus der anderen Kammer (2) des Kolonnenhauptabschnittes (3), die oberseitig gegenüber dem Innenraum der Kolonne geschlossen und als Verstärkungsteil mit mehreren theoretischen Trennstufen ausgelegt ist, wird ein Extrakt hoher Reinheit abgezogen. Erfindungsgemäß wird die Temperatur in der gegenüber dem Kolonneninnenraum oberseitig geschlossenen Kammer (2) gemessen und durch Steuerung des in dieser Kammer (2) herrschenden Kammerdrucks (P₂) geregelt. Gegenstand der Erfindung ist ferner eine Kolonne mit zugeordneten Meß- und Regeleinrichtungen zur Durchführung des Verfahrens.

## Beschreibung

Die Erfindung betrifft ein Verfahren zur Extraktivdestillation in einer Kolonne, die einen aus parallelen Kammern bestehenden Kolonnenhauptabschnitt unterhalb einer Aufgabeeinrichtung für ein zu trennendes Gemisch, eine Raffinatsektion oberhalb der Aufgabeeinrichtung, einen Abtriebsteil unterhalb des Kolonnenhauptabschnittes sowie einen Sumpf mit zugeordneter Sumpfbeheizung aufweist. Ein Extraktionsmittel wird im Abtriebsteil aufkonzentriert, aus dem Sumpf abgezogen und oberhalb der Raffinatsektion wieder aufgegeben. Eine Raffinatfraktion, deren Löslichkeit im Extraktionsmittel gering ist, wird in einer Kammer des Kolonnenhauptabschnittes aus der extraktionsmittelhaltigen Flüssigkeit ausgestrippt und in der oberseitigen Raffinatsektion zu einem Raffinat hoher Reinheit aufkonzentriert. Aus der anderen Kammer des Kolonnenhauptabschnittes, die oberseitig gegenüber dem Innraum der Kolonne geschlossen und als Verstärkungsteil mit mehreren theoretischen Trennstufen ausgelegt ist, wird ein im Extraktionsmittel besser als das Raffinat lösliches Extrakt hoher Reinheit abgezogen.

Das beschriebene Verfahren ist aus DE-A 33 27 952 bekannt und ermöglicht eine Extraktivdestillation von z.B. azeotrop siedenden oder engsiedenden Gemischen in einer einzigen Kolonne. Das Verfahren ist z.B. vorteilhaft anwendbar, wenn in einer bestehenden Chemieanlage unter beengten Platzverhältnissen eine zusätzliche Extraktivdestillationsanlage zur Erweiterung der Produktionskapazitäten errichtet werden muß. Nachteilig ist bei dem bekannten Verfahren, daß die beiden parallelen Kammern des Kolonnenhauptabschnittes der Kolonne ein gekoppeltes System bilden und die thermodynamischen Verhältnisse in diesen beiden Kammern nicht individuell beeinflußbar sind. Ist beispielsweise die Strippung des Raffinats in der einen Kammer des Kolonnenhauptabschnittes unzureichend, so gelangt ein Teil der Raffinatfraktion zwangsläufig mit den unterseitig in beide Kammern eintretenden Dampfströmen auch in die parallele Kammer, in der das Extraktionsmittel von dem Extrakt getrennt wird, und wird als Verunreinigung mit dem Produktstrom abgezogen. Bei einer Änderung der Aufgabemenge, der Feedzusammensetzung, bei Änderungen des Betriebsdrucks, des Rücklaufverhältnisses und der Extraktionsmittelaufgabe können sich Zustände einstellen, die aufgrund der beschriebenen Kopplung der beiden Kammern des Kolonnenhauptabschnittes eine Verunreinigung des als Seitenabtrieb abgezogenen Extraktes durch diejenige Komponente, die im Extraktionsmittel eine geringe Löslichkeit besitzt, nach sich ziehen.

Der Erfindung liegt die Aufgabe zugrunde, eine Regelung für das in einer Kolonne betriebene Verfahren anzugeben, mit der eine hohe, dem Vorgabewert entsprechende Reinheit sowie eine dem Vorgabewert entsprechende Menge bzw. Ausbeute des als Seitenabzug abgezogenen Extraktes sichergestellt ist.

Die Aufgabe wird bei dem eingangs beschriebenen Verfahren erfindungsgemäß dadurch gelöst, daß die Temperatur in der gegenüber dem Kolonneninnenraum oberseitig geschlossenen Kammer gemessen und durch Steuerung des in dieser Kammer herrschenden Kammerdrucks geregelt wird. Vorzugsweise erfolgt die Temperaturmessung in einem unteren Abschnitt der Kammer, die im folgenden auch als Extraktsektion bezeichnet wird. Die erfindungsgemäße Regelung nutzt aus, daß das bei einer Extraktivdestillation von engsiedenden oder azeotrop siedenden Gemischen verwendete Extraktionsmittel eine wesentlich höhere Siedetemperatur als die zu trennenden Fraktionen des Aufgabegemisches besitzt. Die vorzugsweise im unteren Bereich der Extraktsektion gemessene Temperatur ist ein Maß für die Gemischzusammensetzung in diesem Bereich. Weicht der Temperaturmeßwert von einem Vorgabewert ab, so bedeutet dies, daß der unterseitig in die Extraktsektion eintretende Dampfstrom ebenfalls nicht der Auslegung entspricht. Eine Korrektur wird durch Änderung des Druckniveaus in der Extraktsektion vorgenommen. Ist der Temperaturmeßwert kleiner als der Vorgabewert, so wird der Druck in der Extraktsektion reduziert. Mit der Druckabsenkung strömt ein größerer Teil des aufsteigenden Dampfstromes in die Extraktsektion ein, während der als Strippdampf die andere Kammer des Kolonnenhauptabschnittes durchströmende Teilstrom sich entsprechend vermindert. Ist der Temperaturmeßwert in der Extraktsektion größer als der Vorgabewert, wird der Druck in der Extraktsektion angehoben mit der Folge, daß die Dampfströmung in die Extraktsektion hinein abgeschwächt und die Durchströmung der anderen Kammer entsprechend verstärkt wird. Die Erfindung beruht auf der Erkenntnis, daß der Druck in der zum Innenraum der Kolonne oberseitig geschlossenen Kammer gegenüber dem Betriebsdruck in der Kolonne verändert werden kann und daß die Druckdifferenzen zur Steuerung der in die parallelgeschalteten Kammern eintretenden Dampfströme genutzt werden können. Insbesondere kann durch die Regelung sichergestellt werden, daß die Raffinatfraktion im Kolonnenhauptabschnitt stets durch einen ausreichenden Dampfstrom vollständig gestrippt wird und das Raffinat nicht in die Extraktsektion gelangt.

Gemäß einer bevorzugten Ausführungsform der Erfindung wird der Kammerdruck gemessen und so geregelt, daß er einem Druck-Sollwert entspricht. Der Druck-Sollwert wird als Stellgröße für die Temperaturregelung verwendet. Das Extrakt wird dampfförmig abgezogen und kondensiert, wobei ein Kondensatteilstrom in die Kammer zurückgeführt wird. Die Messung des Kammerdruckes erfolgt im Kopfraum der Kammer oder in einem anschließenden, bis zu einem Kondensatsammelbehälter reichenden Leitungssystem.

Gemäß einer bevorzugten Ausführung der Erfindung wird die aus den beiden Kammern des Kolonnenhauptabschnittes unterseitig ablaufende Flüssigkeit auf einem Fangboden gesammelt, zu einem Erhitzer abgeleitet und nach einer Erhitzung an der Oberseite des Abtriebsteils aufgegeben.

Eine weitere Verbesserung des erfindungsgemäßen Verfahrens läßt sich durch die folgenden Maßnahmen erreichen. Vorzugsweise wird die Temperatur, die sich in einem unteren Abschnitt des mehrere theoretische Trennstufen aufweisenden Abtriebsteils einstellt, ebenfalls gemessen und durch Steuerung der Sumpfbeheizung geregelt. Im Abtriebsteil der Kolonne wird die im Extraktionsmittel lösliche Komponente (Extrakt) aus dem Extraktionsmittel abgetrennt. Die sich im thermodynamischen Gleichgewicht einstellende Konzentration dieser Komponente im Gemisch ist stark temperaturabhängig. Durch die Temperaturmessung im Abtriebsteil und Konstanthaltung der Temperatur an der Meßstelle durch Steuerung der Sumpfbeheizung ist sichergestellt, daß ein der Sollvorgabe entsprechend reines Extraktionsmittel aus dem Sumpf abgezogen und an der Oberseite der Kolonne wieder aufgegeben wird. Die gleichbleibende Qualität des aus dem Sumpf abgezogenen und wieder eingesetzten Extraktionsmittel trägt zu einem störungsfreien Betrieb der Extraktivdestillation bei. Ferner erweist es sich als zweckmäßig, auch in der Raffinatsektion eine Temperaturmessung durchzuführen und die Temperatur an der Meßstelle durch Steuerung des aus dem Sumpf abgezogenen und an der Oberseite der Raffinatsektion aufgegebenen Mengenstroms an Extraktionsmitteln zu regeln. Zur Regelung des Extraktionsmittelmengenstroms wird vorzugsweise ein in einer Rückführleitung angeordnetes Hauptventil sowie ein Zuatzventil in einer das Hauptventil überbrückenden Bypaßleitung verwendet. Dabei wird der Mengendurchsatz durch das Hauptventil in Abhängigkeit eines der Aufgabeeinrichtung zugeführten Aufgabestroms eingestellt, während das Zusatzventil in einem Regelkreis als Stellglied für die Regelung der in der Raffinatsektion gemessenen Temperatur gesteuert wird.

Zur Verbesserung der Reinheit des am Kopf der Kolonne abgezogenen Raffinats wird gemäß einer weiteren Ausgestaltung der Erfindung zwischen dem Kolonnenkopf und der Raffinatsektion ein Kolonnenabschnitt mit mehreren theoretischen Trennstufen zur Raffinatreinigung angeordnet. Das Raffinat wird am Kopf der Kolonne dampfförmig abgezogen und kondensiert. Ein Kondensatteilstrom wird als Rückfluß am Kopf der Kolonne aufgegeben.

Für das erfindungsgemäße Verfahren ergeben sich vielfältige Einsatzmöglichkeiten. Als Aufgabeprodukt können Fraktionen des vollhydrierten Pyrolysebenzins, katalytischen Reformates oder druckraffinierten Kokereibenzols eingesetzt werden. C₄-Fraktionen von Steamcrackern oder FCC-Crackern können zur Gewinnung von Butadien und/oder Butenen eingesetzt werden. Aus C₅-Fraktionen von Steamcrackern oder FCC-Crackern können mittels des erfindungsgemäßen Verfahrens Isopren und/oder Piperylen gewonnen werden. Mit Hilfe polarer Lösungsmittel als Extraktionsmittel können aus C₆-Fraktionen von vollhydriertem Pyrolysebenzin, Reformat oder druckraffiniertem Kokereibenzol hochreines Benzol gewonnen werden. Aus C₆/C₇-Fraktionen von vollhydriertem Pyrolysebenzin, Reformat oder druckraffiniertem Kokereibenzol lassen sich hochreines Benzol und Toluol mit Nitrierqualität unter Verwendung des erfindungsgemäßen Verfahrens gewinnen. Aus C₆/C₇/C₈-Fraktionen von vollhydriertem Pyrolysebenzin, Reformat oder druckraffiniertem Kokereibenzol, sind ebenfalls mittels des erfindungsgemäßen Verfahrens hochreines Benzol, Toluol mit Nitrierqualität und C₈-Aromaten darstellbar. Aus der C₈-Fraktion von Rohpyrolysebenzin kann schließlich Styrol mit Polymerisationsqualität gewonnen werden. Als Extraktionsmittel zur Trennung von Kohlenwasserstoffen eignen sich polare Lösungsmittel. In der Praxis bewährte Extraktionsmittel für die Extraktivdestillation, die auch bei den erfindungsgemäßen Verfahren zum Einsatz kommen können, sind Sulfolan, N-Methylpyrollidon, Dimethylacetamid, Acetonitril, Dimethylsulfoxid, Dimethylformamid, Ethylenglykole sowie Mischungen der vorstehend genannten Stoffe. Als Extraktionsmittel können ferner Morpholin bzw. N-substituierte Morpholine, gegebenenfalls auch in Mischungen mit den vorstehend genannten Extraktionsmitteln verwendet werden. Schließlich kann den genannten Extraktionsmitteln auch Wasser zugesetzt werden und können Mischungen aus Wasser und den vorstehend genannten Extraktionsmitteln eingesetzt werden.

Gegenstand der Erfindung ist ferner eine Kolonne zur Extraktivdestillation mit den Merkmalen des Anspruches 10. Die Ansprüche 11 bist 13 betreffen bevorzugte Ausgestaltungen der erfindungsgemäßen Kolonne.

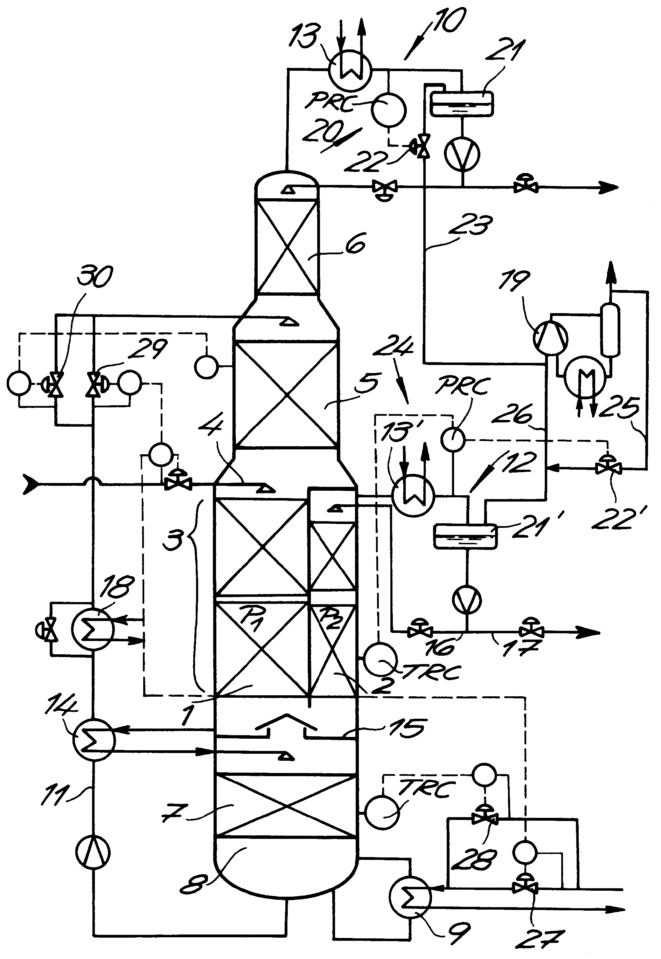

Im folgenden wird die Erfindung anhand einer lediglich ein Ausführungsbeispiel darstellenden Zeichnung näher erläutert. Die einzige Figur zeigt schematisch eine erfindungsgemäße Rektifizierkolonne mit zugeordneten Meß- und Regeleinrichtungen für eine Extraktivdestillation.

Die Kolonne weist einen aus zwei parallelen Kammern 1,2 bestehenden Kolonnenhauptabschnitt 3 unterhalb einer Aufgabeeinrichtung 4 für ein zu trennendes Gemisch, eine Raffinatsektion 5 und einen Kolonnenabschnitt 6 zur Raffinatreinigung jeweils oberhalb der Aufgabeeinrichtung, einen Abtriebsteil 7 unterhalb des Kolonnenhauptabschnittes 3 sowie einen Sumpf 8 mit zugeordneter Sumpfbeheizung 9 auf. Die Kolonnenabschnitte enthalten Einbauten zur Förderung des Stoffaustausches zwischen Dampf und Flüssigphase, z.B. Strukturpackungen. Am Kopf der Kolonne erkennt man eine Anordnung 10 mit Raffinatabzug, Kondensator sowie einer Einrichtung für eine Teilrückführung des im Kondensator verflüssigten Raffinats.

Das zu trennende Stoffgemisch, z.B. ein Aromaten/Nichtaromaten-Gemisch, Olefin/Paraffin-Gemisch oder Olefin/Paraffin/Diolefin-Gemisch, wird über die Aufgabeeinrichtung 4 zwischen dem Kolonnenhauptabschnitt 3 und der Raffinatsektion 5 aufgegeben. Ferner wird ein Extraktionsmittel oberhalb der Raffinatsektion 5 aufgegeben, welches im Abtriebsteil 7 der Kolonne aufkonzentriert, aus dem Sumpf 8 abgezogen und durch eine Rückführeinrichtung 11 zur Aufgabestelle oberhalb der Raffinatsektion 5 zurückgeführt wird.

Der Kolonnenhauptabschnitt 3 weist zwei parallelgeschaltete Kammern 1, 2 auf. Eine Kammer 1 ist oberseitig und unterseitig offen, enthält Einbauten zur Verbesserung des Stoffaustausches zwischen Dampf- und Flüssigphase und ist als Abtriebsteil mit mehreren theoretischen Trennstufen für die Abtrennung des Raffinats aus dem extraktionsmittelhaltigen Gemisch ausgelegt. Diese Kammer 1 wird im folgenden auch als Raffinatsektion bezeichnet. Die andere Kammer 2 ist oberseitig geschlossen und unterseitig offen. Sie enthält ebenfalls Einbauten zur Förderung des Stoffaustausches zwischen Dampf- und Flüssigphase. In einem Raum oberhalb der Einbauten sind Einrichtungen 12 für den dampfförmigen Produktabzug eines im wesentlichen extraktionsmittelfreien Extraktes sowie den Rückfluß eines in einem Kondensator 13' verflüssigtem Produktteilstromes vorgesehen. Die oberseitig gegenüber dem Innenraum der Kolonne geschlossene Kammer 2, aus der im Extraktionsmittel lösliches Extrakt hoher Reinheit als Seitenabzug abgezogen wird, wird im folgenden auch als Extraktsektion bezeichnet.

Zwischen dem Kolonnenabtriebsteil 7 und dem Kolonnenhauptabschnitt 3 ist eine Einrichtung zur Beheizung der aus dem beiden Kammern 1, 2 des Kolonnenhauptabschnittes 3 ablaufenden Flüssigkeit angeordnet. Sie weist einen Durchlauferhitzer 14 auf. Unterhalb des Kolonnenhauptabschnittes ist ein gasdurchlässiger Fangboden 15 mit einem an den Durchlauferhitzer 14 angeschlossenen Flüssigkeitsablauf angeordnet. Das aus dem Durchlauferhitzer 14 austretende erhitzte Gemisch ist unterhalb des Fangbodens 15 dem Abtriebsteil 7 der Kolonne zuführbar.

Der obere Kolonnenabschnitt 6, der sich von dem Extraktionsmittelzulauf bis zum Kopf der Kolonne erstreckt, dient der Raffinatreinigung. Flüssiges Rücklaufraffinat wird am Kopf aufgegeben, wobei im Stoffaustausch mit dem aufsteigenden Dampf Extraktionsmittelreste aus dem Dampfstrom abgeschieden werden. Am unteren Ende dieses Kolonnenabschnittes fällt ein mit Extraktionsmittel beladenes Raffinat flüssig an, welches mit dem über den Extraktionsmittelzulauf zugeführten Extraktionsmittel gemischt und in die Raffinatsektion 5 eingeleitet wird. Die an der Unterseite der Raffinatsektion 5 ablaufende Flüssigkeit wird zusammen mit dem zu trennenden Aufgabegemisch auf die oberseitig und unterseitig offene Kammer 1 aufgegeben. Die unterseitig aus der Kammer 1 austretende Flüssigkeit besteht im wesentlichen aus Extraktionsmittel und dem mit dem Extraktionsmittel mitgeführten Extrakt, z.B. Aromaten, Olefinen und Diolefinen, also denjenigen Komponenten, die im Extraktionsmittel gut löslich sind. Sie wird mit der aus der Extraktsektion 2 des Kolonnenhauptabschnittes 3 unterseitig austretenden Flüssigkeit gemischt und nach Wärmezufuhr in den unterseitig anschließenden Kolonnenabtriebsteil 7 eingeleitet. Durch Stoffaustausch mit aufsteigendem Dampf fällt ein Sumpfprodukt an, welches aus im wesentlichen reinem Extraktionsmittel besteht.

Ein Teilstrom des aus dem Kolonnenabtriebsteil 7 aufsteigenden, mit Extrakt angereicherten Dampfes tritt in die oberseitig und unterseitig offene Kammer 1 des Kolonnenhauptabschnittes 3 ein und dient hier zur Strippung des Raffinats. Der andere Teil durchströmt die oberseitig geschlossene Kammer 2 des Kolonnenhauptabschnittes, wobei im Stoffaustausch mit flüssigem Rücklauf Extraktionsmittelreste aus dem Dampf abgetrennt werden. Ein im wesentlichen reiner Extraktdampf wird am oberen Ende der Kammer 2 in einem Kolonnenseitenabzug abgezogen und im Kondensator 13' verflüssigt. Ein Teilstrom des Seitenabzugs wird über die Rückflußleitung 16 der Kolonne wieder aufgegeben, der andere Teil in einer Produktleitung 17 abgeführt.

Das im Sumpf 8 im wesentlichen in reiner Form anfallende Extraktionsmittel wird durch die Sumpfbeheizung geführt, wobei ein Teilstrom verdampft wird und als Dampf in dem Kolonnenabtriebsteil 7 aufsteigt. Aus dem Kolonnensumpf 8 wird flüssiges Extraktionsmittel abgezogen, in einem Wärmetauscher 18 z.B. mit Kühlwasser auf die für die Trennaufgabe notwendige Temperatur heruntergekühlt und über den Extraktionsmittelzulauf wieder in die Kolonne eingespeist.

Im nicht limitierenden Ausführungsbeispiel wird die Extraktivdestillation unter einem Druck unterhalb atmosphärischen Drucks durchgeführt. Im Rahmen der Erfindung liegt es auch, die Kolonne bei atmosphärischem Druck oder bei einem Druck oberhalb Atmosphärendrucks zu betreiben. Zur Absaugung nicht kondensierbarer Bestandteile ist im Ausführungsbeispiel eine Flüssigkeitsringvakuumpumpe 19 vorgesehen. Zur Regelung des Betriebsdruckes ist eine Meß- und Regeleinrichtung 20 am Kopf der Kolonne vorgesehen. Sie weist eine Druckmeßeinrichtung PRC in einem an den Kopf der Kolonne anschließenden, bis zu einem Kondensatsammelbehälter 21 reichenden Leitungssystem und ein nach Maßgabe des Druckmeßwertes PRC gesteuertes Druckregelventil 22 auf, welches in einer Verbindungsleitung 23 zwischen dem Kondensatsammelbehälter 21 und der Saugseite der Flüssigkeitsringvakuumpumpe 19 angeordnet ist.

Der Kammerdruck P₂ in der zum Innenraum der Kolonne oberseitig geschlossenen Kammer 2 des Kolonnenhauptabschnittes 3, der Extraktsektion, ist unabhängig von dem im Innenraum der Kolonne herrschenden Druck P₁ regelbar. Zur Regelung des in der Extraktsektion herrschenden Kammerdruckes P₂ ist eine zweite Druckmeß- und Regeleinrichtung 24 vorgesehen. Sie weist eine Druckmeßeinrichtung PRC auf, die im Seitenabzug zwischen Kondensator 13' und Kondensatsammelbehälter 21' angeordnet ist, und umfaßt ferner ein Druckregelventil 22', welches in einer Bypaßleitung 25 zur Flüssigkeitsringvakuumpumpe 19 angeordnet ist. Die Saugleitung der Flüssigkeitsringvakuumpumpe ist durch eine Saugleitung 26 mit dem Kondensatsammelbehälter 21' verbunden. Der Kammerdruck P₂ wird gemessen und so geregelt, daß er einem Druck-Sollwert entspricht. Der Druck-Sollwert ist veränderbar und wird als Stellgröße für eine Temperaturregelung herangezogen. Unter Verwendung einer an einen unteren Abschnitt der Extraktsektion 2 angeschlossenen Meßeinrichtung TRC wird die Temperatur gemessen und durch Steuerung des in der Kammer 2 herrschenden Druckes P₂ geregelt. Die Temperaturmeßeinrichtung TRC und die zuvor beschriebene Druckregeleinrichtung PRC sind zu einem Regelkreis verbunden. Darin wird der Druck-Sollwert als veränderbare Stellgröße für die Temperaturregelung eingesetzt. Ist der Temperaturmeßwert an der Meßstelle größer als ein Temperaturvorgabewert, wird ein größerer Druck-Sollwert vorgegeben und das Druckniveau P₂ in der Kammer 2 durch Öffnen des Regelventils 22' angehoben. Ist der an der Temperaturmeßstelle TRC gemessene Temperaturmeßwert kleiner als der Temperaturvorgabewert, wird der Druck-Sollwert reduziert und das Druckniveau P₂ in der Kammer 2 durch Schließen des Regelventils 22' abgesenkt. Durch Änderung des Druckniveaus P₂ in der Kammer 2 wird die Dampfströmung in die Extraktsektion 2 hineinverstärkt oder abgeschwächt.

Die Sumpfbeheizung 9 wird mit Dampf beheizt, dessen Menge durch ein in der Dampfzuführleitung angeordnetes Regelventil 27 in Abhängigkeit der Aufgabemenge gesteuert wird. In einer Bypaßleitung ist ein Zusatzregelventil 28 angeordnet, das in Abhängigkeit einer in einem unteren Abschnitt des Abtriebsteils 7 angeordneten Temperaturmeßeinrichtung TRC gesteuert wird. Die Temperatur an der Meßstelle TRC wird durch Steuerung der Sumpfbeheizung geregelt.

Der Extraktionsmittelmengenstrom ist ebenfalls regelbar. Zur Regelung sind ein Hauptventil 29 in der Rückführleitung 11 und ein Zusatzventil 30 in einer das Hauptventil überbrückenden Bypaßleitung vorgesehen. Der Mengendurchsatz durch das Hauptventil 29 wird in Abhängigkeit eines der Aufgabeeinrichtung 4 zugeführten Aufgabestroms eingestellt. Das Zusatzventil 30 arbeitet als Stellglied in einem Temperaturregelkreis. In der Raffinatsektion 5 wird eine Temperaturmessung TRC durchgeführt. Die Temperatur an der Meßstelle wird durch Steuerung des aus dem Sumpf 8 abgezogenen und an der Oberseite der Raffinatsektion 5 aufgegebenen Mengenstroms an Extraktionsmittel geregelt. Die Temperaturmeßeinrichtung TRC arbeitet zu diesem Zweck auf den Regelkreis des Zusatzventils 30.

## Patentansprüche

1. Verfahren zur Extraktivdestillation in einer Kolonne, die einen aus zwei parallelen Kammern (1, 2) bestehenden Kolonnenhauptabschnitt (3) unterhalb einer Aufgabeeinrichtung (4) für ein zu trennendes Gemisch, eine Raffinatsektion (5) oberhalb der Aufgabeeinrichtung (4), einen Abtriebsteil (7) unterhalb des Kolonnenhauptabschnittes (3) sowie einen Sumpf (8) mit zugeordneter Sumpfbeheizung (9) aufweist, wobei
ein Extraktionsmittel im Abtriebsteil (7) aufkonzentriert, aus dem Sumpf (8) abgezogen und oberhalb der Raffinatsektion (5) wieder aufgegeben wird,
eine Raffinatfraktion in einer Kammer (1) des Kolonnenhauptabschnittes (3) aus der extraktionsmittelhaltigen Flüssigkeit ausgestrippt und in der oberseitigen Raffinatsektion (5) zu einem Raffinat hoher Reinheit aufkonzentriert wird,
aus der anderen Kammer (2) des Kolonnenhauptabschnittes (3), welche oberseitig gegenüber dem Innenraum der Kolonne geschlossen und als Verstärkungsteil mit mehreren theoretischen Trennstufen ausgelegt ist, ein Extrakt hoher Reinheit abgezogen wird,
**dadurch gekennzeichnet,** daß die Temperatur in der gegenüber dem Kolonneninnenraum oberseitig geschlossenen Kammer (2) gemessen und durch Steuerung des in dieser Kammer (2) herrschenden Kammerdrucks (P₂) geregelt wird.

2. Verfahren nach Anspruch 1, dadurch gekennzeichnet, daß die Temperaturmessung (TRC) in einem unteren Abschnitt dieser Kammer (2) erfolgt.

3. Verfahren nach Anspruch 1 oder 2, dadurch gekennzeichnet, daß der Kammerdruck (P₂) gemessen und so geregelt wird, daß er einem Druck-Sollwert entspricht, und daß der Druck-Sollwert als Stellgröße für die Temperaturregelung (TRC) verwendet wird.

4. Verfahren nach einem der Ansprüche 1 bis 3, dadurch gekennzeichnet, daß das Extrakt dampfförmig abgezogen und kondensiert wird, wobei ein Kondensatteilstrom als Rückfluß in die Kammer (2) zurückgeführt wird, und daß der Kammerdruck (P₂) im Kopfraum der Kammer oder in einem anschließenden, bis zu einem Kondensatsammelbehälter (21) reichenden Leitungssystem gemessen wird.

5. Verfahren nach einem der Ansprüche 1 bis 4, dadurch gekennzeichnet, daß die aus den beiden Kammern (1, 2) des Kolonnenhauptabschnittes (3) unterseitig ablaufende Flüssigkeit auf einem Fangboden (15) gesammelt, zu einem Erhitzer (14) abgeleitet und nach einer Erhitzung an der Oberseite des Abtriebsteils (7) aufgegeben wird.

6. Verfahren nach einem der Ansprüche 1 bis 5, dadurch gekennzeichnet, daß die sich in einem unteren Abschnitt des mehrere theoretische Trennstufen aufweisenden Abtriebsteils (7) einstellende Temperatur gemessen und durch Steuerung der Sumpfbeheizung (9) geregelt wird.

7. Verfahren nach einem der Ansprüche 1 bis 6, dadurch gekennzeichnet, daß in der Raffinatsektion (5) eine Temperaturmessung (TRC) durchgeführt und die Temperatur an der Meßstelle durch Steuerung des aus dem Sumpf (8) abgezogenen und an der Oberseite der Raffinatsektion (5) aufgegebenen Mengenstroms an Extraktionsmittel geregelt wird.

8. Verfahren nach Anspruch 7, dadurch gekennzeichnet, daß zur Regelung des Extraktionsmittelmengenstroms ein in einer Rückführleitung (11) angeordnetes Hauptventil (29) sowie ein Zusatzventil (30) in einer das Hauptventil überbrückenden Bypaßleitung verwendet werden, wobei der Mengendurchsatz durch das Hauptventil (29) in Abhängigkeit eines der Aufgabeeinrichtung (4) zugeführten Aufgabestroms eingestellt wird und wobei das Zusatzventil (30) in einem Regelkreis als Stellglied für die Regelung der in der Raffinatsektion (5) gemessenen Temperatur (TRC) gesteuert wird.

9. Verfahren nach einem der Ansprüche 1 bis 8, dadurch gekennzeichnet, daß das Raffinat am Kopf der Kolonne dampfförmig abgezogen und kondensiert wird, wobei ein Kondensatteilstrom als Rückfluß am Kopf der Kolonne aufgegeben wird und wobei zwischen dem Kolonnenkopf und der Raffinatsektion (5) ein Kolonnenabschnitt (16) mit mehreren theoretischen Trennstufen zur Raffinatreinigung angeordnet ist.

10. Kolonne zur Extraktivdestillation mit
einem aus zwei parallelen Kammern (1, 2) bestehenden Kolonnenhauptabschnitt (3) unterhalb einer Aufgabeeinrichtung (4) für ein zu trennendes Gemisch,
einer Raffinatsektion (5) oberhalb der Aufgabeeinrichtung (4),
einem Abtriebsteil (7) unterhalb des Kolonnenhauptabschnittes (3),
einem Sumpf (8) mit zugeordneter Sumpfbeheizung (9),
einer Rückführeinrichtung (11) für die Rückführung von Extraktionsmittel aus dem Sumpf zu einer Aufgabestelle oberhalb der Raffinatsektion (5) und
zugeordneten Meß- und Regeleinrichtungen,
wobei eine Kammer (1) des Kolonnenhauptabschnittes oberseitig und unterseitig offen ist und wobei an die andere Kammer (2) des Kolonnenhauptabschnittes (3), die oberseitig gegenüber dem Kolonneninnenraum geschlossen und unterseitig offen ausgebildet ist, ein Seitenabzug für den Abzug eines im Exktraktionsmittel löslichen Extraktes hoher Reinheit angeordnet ist, wobei die beiden Kammern 1, 2 des Kolonnenhauptabschnittes (3) die Raffinatsektion (5) und der Abtriebsteil (7) Einbauten zur Förderung des Stoffaustausches zwischen Dampf- und Flüssigphase enthalten, **dadurch gekennzeichnet**, daß die Meß- und Regeleinrichtungen eine an den unteren Abschnitt der oberseitig geschlossenen Kammer (2) angeschlossene Temperaturmeßeinrichtung (TRC) sowie eine an den Seitenabzug oder den oberen Bereich dieser Kammer (2) angeschlossene Druckmeßund Regeleinrichtung (PRC, 22') umfassen, wobei die Temperaturmeßeinrichtung (TRC und die Druckmeß- und Regeleinrichtung (PRC, 22') zu einem Regelkreis verbunden sind, der durch Steuerung des in der Kammer (2) herrschenden Kammerdrucks (P₂) die Temperatur in der Kammer (2) regelt.

11. Kolonne nach Anspruch 10, dadurch gekennzeichnet, daß zwischen dem Kolonnenhauptabschnitt (3) und dem Abtriebsteil (7) ein Fangboden (15) zur Sammlung der aus den beiden Kammern 1, 2 des Kolonnenhauptabschnittes (3) unterseitig ablaufenden Flüssigkeit angeordnet ist, dessen Flüssigkeitsablauf an einen Durchlauferhitzer 14 angeschlossen ist, und daß das aus dem Durchlauferhitzer (14) austretende erhitzte Gemisch unterhalb des Fangbodens (15) dem Abtriebsteil (7) der Kolonne zuführbar ist.

12. Kolonne nach Anspruch 10 oder 11, dadurch gekennzeichnet, daß die Sumpfbeheizung (9) eine Heizmittelzuführung mit einem Regelventil (27) und einem in einer Bypassleitung angeordneten Zusatzregelventil (28) aufweist, wobei das Regelventil (27) in Abhängigkeit der der Aufgabeeinrichtung (4) zugeführten Aufgabemenge ansteuerbar ist und wobei das Zusatzregelventil (28) in Abhängigkeit einer in einem unteren Abschnitt des Abtriebsteils (7) angeordneten Temperaturmeßeinrichtung (TRC) steuerbar ist.

13. Kolonne nach einem der Ansprüche 10 bis 12, dadurch gekennzeichnet, daß die Rückführeinrichtung (11) ein Hauptventil (29) zur Mengenregelung des Extraktionsmittelmengenstroms und in einer das Hauptventil (29) überbrückenden Bypassleitung ein Zusatzventil (30) aufweist, wobei das Hauptventil (29) in Abhängigkeit der der Aufgabeeinrichtung (4) zugeführten Aufgabemenge einstellbar ist und wobei das Zusatzventil (30) als Stellglied in einem Temperaturregelkreis arbeitet, und daß der Temperaturregelkreis eine an die Raffinatsektion (5) angeschlossene Temperaturmeßeinrichtung (TRC) aufweist.
